# FASCICULE DE BREVET EUROPEEN

(11) **EP 2 071 275 B1**
(45) Date de publication et mention de la délivrance du brevet: **05.09.2012**
(21) Numéro de dépôt: 08170343.1
(22) Date de dépôt: 01.12.2008
(51) Int. Cl.: G01B 5/02, G07B 17/00

(54) **Procédé pour la détermination des dimensions d'un article de courrier**
Verfahren zur Bestimmung der Maße eines Postartikels
Method of determining the dimensions of a mail item.

(30) Priorité: 10.12.2007 FR 0759669
(43) Date de publication de la demande: 17.06.2009
(73) Titulaire: NEOPOST TECHNOLOGIES, 92220 Bagneux (FR)
(72) Inventeur: Krasuski, Marek, 92260 FONTENAY AUX ROSES (FR)
(74) Mandataire: David, Alain

(56) Documents cités:
- EP-A- 1 560 165
- EP-A- 1 811 266
- DE-U1- 9 311 497
- GB-A- 2 074 321
- GB-A- 2 236 859
- US-A- 5 755 918

## Description

### Domaine de la technique

La présente invention se rapporte au domaine du traitement de courrier et elle vise en particulier un procédé pour la détermination des dimensions d'un article de courrier destiné à être affranchi dans un système d'affranchissement.

### Art antérieur

Il est bien connu que la détermination du montant d'affranchissement d'un article de courrier dépend de plusieurs paramètres comme notamment l'adresse du destinataire, la classe de courrier, le service demandé, le poids ou les dimensions de cet article de courrier. L'adresse, la classe et le service peuvent être saisis au clavier du système d'affranchissement et le poids obtenu avec une balance automatique interne ou externe au système d'affranchissement. Les dimensions de l'article de courrier sont aussi souvent déterminées automatiquement au niveau d'un module d'alimentation du système d'affranchissement.

Toutefois, une telle détermination automatique qui est relativement onéreuse et ne se justifie donc que pour des volumes d'affranchissement élevé, n'est pas envisageable dans des systèmes d'affranchissement de bas de gamme destinés à réaliser de quelques dizaines à quelques centaines d'affranchissement par jour et où l'alimentation de la machine est souvent effectuée selon un mode manuel.

Le document US5755918 décrit un dispositif portable pour déterminer les dimensions des colis, utilisant une roue munie d'un codeur rotatif, entraînée en rotation sur le colis par l'utilisateur.

GB2236859 décrit un dispositif pour déterminer la longueur et l'épaisseur d'une enveloppe par une roue munie d'un codeur rotatif, entraînée en rotation lorsque l'enveloppe est guidé en-dessous de la roue. L'épaisseur de l'enveloppe est déterminée en même temps en mesurant la déflexion de la roue, le type de codeur n'étant pas spécifié.

EP1811266 décrit un dispositif pour déterminer l'épaisseur d'une enveloppe en mesurant la rotation d'un codeur lié par un levier fixé à l'autre extrémité à une roue entraînée en rotation lorsque l'enveloppe est guidé en-dessous de cette roue.

### Objet et définition de l'invention

La présente invention vise ainsi à remédier aux inconvénients précités et à permettre la détermination des dimensions d'un article de courrier de façon simple. Un but de l'invention est aussi de permettre que cette mesure puisse être effectuée aussi bien pour des lettres que pour des paquets.

Ces buts sont atteints conformément à l'invention avec un procédé de détermination des dimensions d'un article de courrier selon la revendication 1 au moyen d'un dispositif portable de mesure selon la revendication 4.

Le simple dispositif portable ainsi défini suffit à déterminer les dimensions d'un colis sans recourir à des dispositifs motorisés. Et l'adjonction d'un capteur d'épaisseur lui permet en outre de déterminer les dimensions d'une enveloppe.

De préférence, lesdites valeurs dimensionnelles sont affichées au niveau d'une interface utilisateur intégrée à un système d'affranchissement ou dudit dispositif portable de mesure.

Avantageusement, ledit dispositif portable de mesure est relié audit système d'affranchissement par une liaison sans fil.

### Brève description des dessins

D'autres caractéristiques et avantages de l'invention ressortiront de la description suivante de modes de réalisation particuliers, donnés à titre d'exemples, en référence aux dessins annexés, sur lesquels :
- la figure 1 est une vue schématique illustrant un exemple de réalisation d'un dispositif portable de mesure permettant la détermination des dimensions d'un article de courrier selon le procédé de l'invention ;
- la figure 2 est une vue en coupe selon le plan II-II de la figure 1 ;
- les figures 3A, 3B, 3C illustrent des étapes successives permettant la détermination des longueur, largeur et épaisseur d'une enveloppe avec le dispositif portable de mesure de la figure 1,
- la figure 4 illustre l'étape permettant la détermination des longueur, largeur et hauteur d'un colis avec le dispositif portable de mesure de la figure 1, et
- la figure 5 illustre une vue schématique d'un second exemple de réalisation d'un dispositif portable de mesure.

### Description détaillée de modes de réalisation préférentiels

Le dispositif portable de mesure mettant en oeuvre le procédé selon l'invention peut grâce à ses moyens simples, entièrement non motorisés, déterminer soit la longueur, la largeur et l'épaisseur d'une enveloppe, sous réserve que cette enveloppe n'excède pas une épaisseur prédéterminée, soit la longueur, la largeur et la hauteur d'un colis.

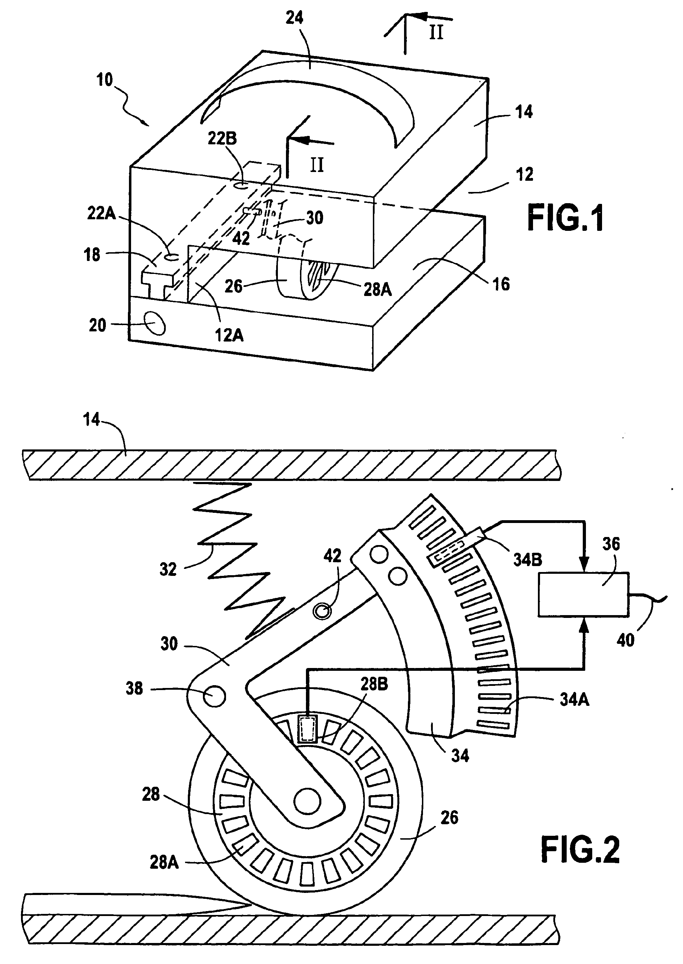

Les figures 1 et 2 illustrent un exemple de réalisation d'un tel dispositif permettant la détermination des dimensions d'une enveloppe selon l'invention.

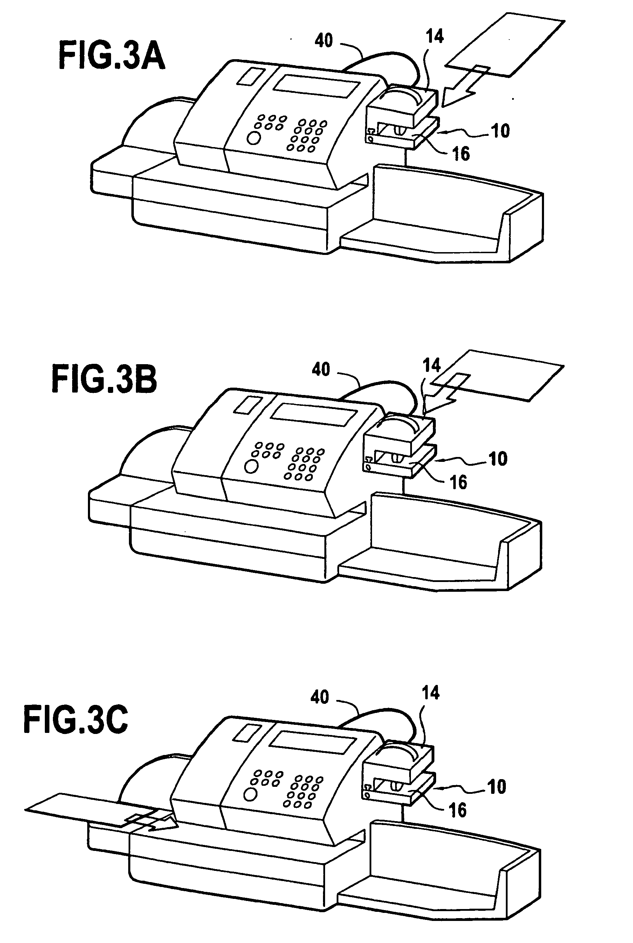

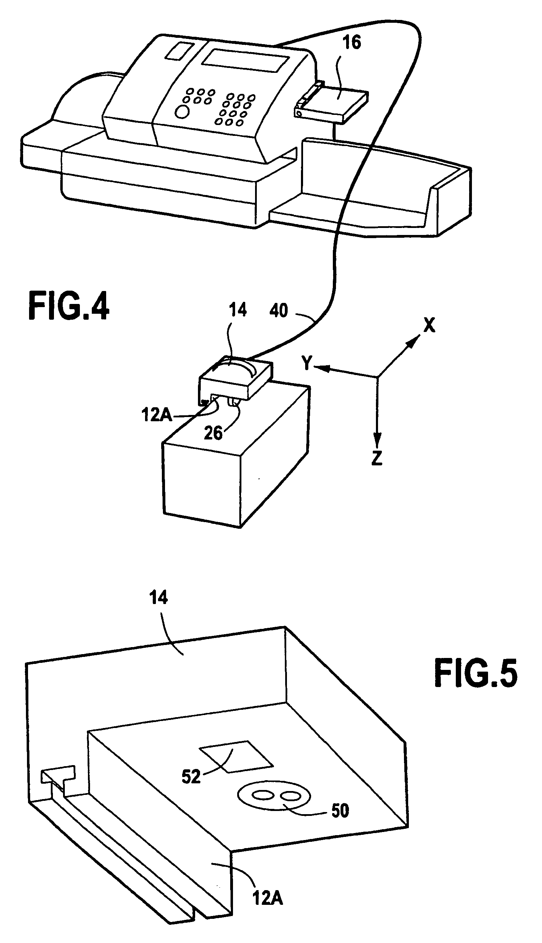

Ce dispositif 10 qui présente une forme générale parallélépipédique ou cubique est traversé d'une ouverture ou fente rectangulaire 12 dont la hauteur correspond à une hauteur maximale admissible, typiquement 25 mm, pour le passage de l'enveloppe à mesurer et qui est pourvue d'une surface de référence latérale 12A permettant le guidage des enveloppes lors de ce passage. Il pourra être posé au coté du système d'affranchissement mais sera plutôt avantageusement monté fixement sur une paroi latérale de ce système (sur ce point voir par exemple les figures 3A et 4). Il est constitué de deux parties séparables, un boîtier 14 ayant une forme de r et une table de transport 16 sur laquelle l'utilisateur déplacera par deux fois l'enveloppe à mesurer, une fois dans le sens de sa longueur puis une autre fois dans le sens de sa largeur. Le boîtier est fixé à cette table de façon amovible par sa partie verticale, par exemple au moyen d'un rail 18, un bouton de commande 20 actionnant des pions 22A, 22B traversant ce rail permettant, comme il est connu, par une pression de l'utilisateur sur ce bouton, de désolidariser ce boîtier de la table. Le boîtier comporte en outre avantageusement une poignée de transport 24 pour permettre son utilisation sur des paquets.

Comme le montre la vue en coupe de la figure 2, il est prévu dans l'ouverture 12, des doubles moyens de détection sont prévus pour déterminer d'une part les longueur et largeur de l'enveloppe et d'autre part son épaisseur lorsque celle-ci est guidée par l'utilisateur le long de la surface de référence latérale 12A. Plus particulièrement, une roue 26 actionnée par le déplacement de l'enveloppe avec laquelle elle va être en contact est munie d'un premier codeur rotatif 28 comportant un marquage 28A défilant devant un premier capteur 28B, et est montée à une extrémité libre d'un levier pivotant 30 qui agit à l'encontre d'un moyen élastique 32 solidaire du boîtier 14. Ce levier 30 dont une extrémité est reliée à la roue 28 présente de préférence deux bras en forme de L ou V et son autre extrémité est reliée à un second codeur rotatif 34 dont le marquage 34A défile devant un second capteur 34B avec lequel il coopère.

On notera que pour éviter les bourrages des fines enveloppes, l'effort de rappel du levier pivotant 30 via le moyen élastique 32 doit être le plus faible possible tout en étant suffisant pour assurer une mise en route rapide de la roue 26 par l'enveloppe.

En coopération avec une unité de traitement 36 reliée aux moyens de comptabilisation du système d'affranchissement, le premier capteur est apte à délivrer une valeur pour la longueur ou la largeur de l'enveloppe alors que le second capteur est apte à délivrer une valeur pour l'épaisseur de cette enveloppe.

Pour cela, le levier 30 sous l'action de la roue 26 pivote autour d'un axe d'articulation 38 disposé par exemple à l'intersection des deux bras du L ou V qui forment entres elles un angle compris avantageusement entre 30 et 90°. Cet axe est monté dans le boîtier 14 transversalement par rapport au sens de déplacement des enveloppes. Le second codeur rotatif 34 se présente avantageusement sous la forme d'une partie d'anneau d'environ 30° d'angle, sur lequel est porté le marquage 34A constitué lui-même de simple fentes ou d'ouvertures disposées en arc de cercle. Le second capteur 34B est avantageusement formé d'un ensemble émetteur/récepteur lumineux (par exemple à LED) solidaire du boîtier 14 et qui délivre, à chaque passage d'un marquage, un signal pour l'unité de traitement 36. On comptabilise ainsi au niveau de cette unité de traitement le nombre d'ouvertures ou fentes vues par le capteur duquel on déduit l'épaisseur de l'enveloppe. De même, la dimension de l'enveloppe (longueur ou largeur) est obtenue par le nombre de marquages 28A défilant devant le premier capteur 28B (classiquement un ensemble émetteur/récepteur lumineux, par exemple à LED) entre deux arrêts du premier codeur rotatif 28 lorsque l'utilisateur avance une enveloppe sur la table de transport jusqu'à ce qu'elle ne soit plus en prise avec la roue 26. Une fois déterminées, ces dimensions sont transmises par un câble de liaison 40 au système d'affranchissement.

Le fonctionnement du dispositif est maintenant décrit en regard des figures 3A à 3C. A l'état initial, la roue 26 comportant le premier codeur rotatif 28 est à l'arrêt. Lorsque l'utilisateur passe une première fois l'enveloppe au travers de la fente 12 du boîtier (dans le sens de la longueur comme l'illustre la figure 3A), cette enveloppe va à la fois entraîner en rotation la roue 26 avec une vitesse de défilement sensiblement constante jusqu'à ce qu'elle ne soit plus en prise (c'est-à-dire sur toute sa longueur) et faire pivoter le levier 30 jusqu'à une position sensiblement constante correspondant à l'épaisseur de cette enveloppe. Ces déplacements de la roue et du levier vont générer des impulsions au niveau des premier et second capteurs correspondant respectivement à la longueur et l'épaisseur de l'enveloppe dont les valeurs sont déterminées alors par l'unité de traitement 36 avant d'être ensuite adressées au système d'affranchissement. Une fois ces valeurs reçues, celui-ci va, par l'intermédiaire de son interface utilisateur, éventuellement les afficher et inviter l'utilisateur à repasser une nouvelle fois l'enveloppe dans le dispositif, cette fois dans le sens de sa largeur (voir la figure 3B) afin d'obtenir une mesure de cette autre dimension de l'enveloppe. Bien entendu, ce nouveau passage s'accompagne aussi d'une nouvelle mesure de l'épaisseur qui peut toutefois être (dans ce cas, il peut être calculée une valeur moyenne) ou non prise en compte par l'unité de traitement. Comme précédemment, une fois la valeur de la largeur déterminée par l'unité de traitement, celle-ci est adressée au système d'affranchissement pour si nécessaire affichage et validation par l'utilisateur qui est alors autorisé via l'interface utilisateur à procéder à l'affranchissement de l'enveloppe (figure 3C).

On notera que pour que les mesures de la longueur et de la largeur soient relativement précises, il est nécessaire que la roue ne tourne que pendant qu'elle est en prise avec l'enveloppe, ce qui suppose que cette roue ne soit pas montée folle sur son axe mais plutôt montée juste serrée.

La figure 4 illustre l'application du dispositif portable de mesure à la mesure des dimensions d'un colis ou paquet. Dans cette configuration, le boîtier 14 est séparé de la table de transport 16 et n'est plus relié au système d'affranchissement que par son câble de liaison 40. Cette séparation résultant de l'action du bouton de commande 20 va être signalée automatiquement à l'unité de traitement 36 qui va en informer le système d'affranchissement par la liaison 40 et elle va entraîner le blocage du levier pivotant 30 dans une position prédéterminée par une action sur un pion 42 s'étendant alors depuis le boîtier 14 et traversant ce levier. L'utilisateur peut alors déplacer le boîtier successivement sur les trois faces du paquet pour en acquérir les trois dimensions qui seront comme précédemment retransmises au système d'affranchissement par l'unité de traitement 36. Entre chaque saisie, la valeur dimensionnelle déterminée par le premier codeur rotatif 28 est affichée à l'interface utilisateur du système d'affranchissement et lorsque les trois valeurs ont été déterminées, l'utilisateur est autorisé à affranchir une étiquette qui sera ensuite collée sur ce paquet.

On notera que si le dispositif portable de mesure a été décrit comme comportant une liaison 40 avec le système d'affranchissement de type filaire, une liaison sans fil, par exemple WiFi est également possible. Il n'est pas interdit non plus d'envisager qu'il soit dépourvu de cette liaison et que ce dispositif comporte alors un afficheur (non représenté) directement relié à l'unité de traitement 36 et sur lequel puisse apparaître les différentes dimensions de l'article de courrier mesurées par les codeurs rotatifs 28, 34, ces valeurs devant alors ensuite être entrées manuellement par l'utilisateur à l'interface utilisateur du système d'affranchissement.

La figure 5 illustre en perspective vue de dessous, à titre d'exemple, un dispositif portable de mesure comportant un codeur de position optique 50 disposé dans le boitier 14 au dessus du chemin de guidage de l'article de courrier qui peut remplacer l'ensemble roue/premier codeur rotatif et un capteur d'épaisseur 52 qui peut aussi remplacer l'ensemble levier/second codeur rotatif de sorte que le procédé de mesure consiste à guider l'article de courrier le long d'une surface de référence latérale sous ce capteur de position une première fois selon une première dimension de cet article de courrier, guidage à l'issue duquel une valeur de la première dimension de l'article de courrier est déterminée par l'unité de traitement à laquelle ce capteur de position est connecté et est communiquée à un système d'affranchissement auquel le dispositif portable de mesure est relié et une seconde fois selon une deuxième dimension de l'article de courrier à l'issue duquel une valeur de la seconde dimension de l'article de courrier est déterminée par l'unité de traitement et également communiquée au système d'affranchissement.

Ensuite, si l'article de courrier est une enveloppe, il est procédé lors de l'un au moins des guidages de l'article de courrier le long de la surface de référence latérale, au moyen du capteur d'épaisseur, au relevé d'une troisième dimension de l'article de courrier à l'issue duquel une valeur de la troisième dimension de l'article de courrier est déterminée par l'unité de traitement à laquelle ce capteur d'épaisseur est connecté et est communiquée au système d'affranchissement.

Par contre, si l'article de courrier est un colis, l'article de courrier est alors guidé le long de la surface de référence latérale une troisième fois selon une troisième dimension de l'article de courrier à l'issue duquel une valeur de la troisième dimension de l'article de courrier est déterminée par l'unité de traitement et communiquée au système d'affranchissement.

## Revendications

1. Procédé de détermination des dimensions d'un article de courrier au moyen d'un dispositif portable de mesure comportant, monté dans un boîtier (14) fixé à une table de transport (16) de façon amovible, un levier (30) pivotant autour d'un axe d'articulation (38) à l'encontre d'un moyen élastique (32), ledit levier comportant un premier et un second bras réunis par une extrémité au niveau dudit axe d'articulation, l'autre extrémité dudit premier bras étant reliée à une roue (26) munie d'un premier codeur rotatif (28) actionné par la rotation de ladite roue et l'autre extrémité dudit second bras étant reliée à un second codeur rotatif (34) actionné par le pivotement dudit levier, ledit boitier étant en outre muni d'une ouverture (12) comportant une surface de référence latérale (12A) pour le guidage dudit article de courrier lors de son passage sous ladite roue, procédé **caractérisé en ce qu'**il comporte les étapes suivantes :
• entraînement en rotation de ladite roue suite à un premier guidage par l'opérateur dudit article de courrier le long de ladite surface latérale de référence, ledit article de courrier étant passé sous ladite roue selon une première dimension dudit article de courrier,
• génération d'impulsions au niveau dudit premier codeur rotatif correspondant à ladite première dimension dudit article de courrier,
• détermination par une unité de traitement (36) d'une valeur de ladite première dimension dudit article de courrier et communication de ladite valeur à un système d'affranchissement auquel ledit dispositif portable est relié,
• entraînement en rotation de ladite roue suite à un second guidage par l'opérateur dudit article de courrier le long de ladite surface latérale de référence, ledit article de courrier étant passé sous ladite roue selon une deuxième dimension dudit article de courrier,
• génération d'impulsions au niveau dudit premier codeur rotatif correspondant à ladite deuxième dimension dudit article de courrier,
• détermination par ladite unité de traitement d'une valeur de ladite deuxième dimension dudit article de courrier et communication de ladite valeur audit système d'affranchissement, et
selon que ledit article de courrier est une enveloppe ou un colis :
• entraînement en rotation de ladite roue suite à un troisième guidage par l'opérateur dudit colis le long de ladite surface latérale de référence, ledit colis étant passé sous ladite roue selon une troisième dimension dudit colis, ledit levier pivotant étant alors bloqué dans une position prédéterminée par un pion (42) le traversant, et ledit boîtier (14) étant séparé de la table de transport (16),
• génération d'impulsions au niveau dudit premier codeur rotatif correspondant à ladite troisième dimension dudit colis, et
• détermination par ladite unité de traitement d'une valeur de ladite troisième dimension dudit colis et communication de ladite valeur audit système d'affranchissement, ou bien
• pivotement dudit levier jusqu'à une position sensiblement constante et correspondant à une troisième dimension de ladite enveloppe,
• génération d'impulsions au niveau dudit second codeur rotatif correspondant à ladite troisième dimension de ladite enveloppe, et
• détermination par ladite unité de traitement d'une valeur de ladite troisième dimension de ladite enveloppe et de communication de ladite valeur audit système d'affranchissement.

2. Procédé selon la revendication 1, **caractérisé en ce que** lesdites valeurs dimensionnelles sont affichées au niveau d'une interface utilisateur intégrée à l'un au moins dudit système d'affranchissement ou dudit dispositif portable de mesure.

3. Procédé selon l'une quelconque des revendications 1 ou 2, **caractérisé en ce que** ledit dispositif portable est relié audit système d'affranchissement par une liaison sans fil.

4. Dispositif portable de détermination des dimensions d'un article de courrier comportant, monté dans un boîtier (14) fixé à une table de transport (16) de façon amovible et muni d'une ouverture (12) comportant une surface de référence latérale (12A) pour le guidage dudit article de courrier, un levier (30) pivotant autour d'un axe d'articulation (38) à l'encontre d'un moyen élastique (32), ledit levier comportant un premier et un second bras réunis par une extrémité au niveau dudit axe d'articulation, l'autre extrémité dudit premier bras étant reliée à une roue (26) munie d'un premier codeur rotatif (28) actionné par la rotation de ladite roue et l'autre extrémité dudit second bras étant reliée à un second codeur rotatif (34) actionné par le pivotement dudit levier, et une unité de traitement (36) reliée auxdits premier et second codeurs rotatifs permettant, selon que ledit article de courrier est une enveloppe ou un colis, de :
• déterminer les longueur, largeur et épaisseur de ladite enveloppe lorsque celle-ci est guidée par l'opérateur par deux fois le long de ladite surface de référence latérale, ou bien
• déterminer les longueur, largeur et hauteur dudit colis lorsque celui-ci est guidé par l'opérateur par trois fois le long de ladite surface de référence latérale, ledit levier pivotant étant alors bloqué dans une position prédéterminée par un pion (42) le traversant et ledit boîtier (14) étant séparé de la table de transport (16).

5. Dispositif selon la revendication 4, **caractérisé en ce que** lesdites dimensions dudit article de courrier sont déterminées à partir d'un nombre de marquages (28A, 34A) défilant devant un capteur (28B, 34B) associé à chacun desdits codeurs rotatifs.

6. Dispositif selon la revendication 4, **caractérisé en ce que** ledit second codeur rotatif se présente sous la forme d'une partie d'anneau d'environ 30° d'angle comportant une pluralité de fentes ou d'ouvertures (34A) disposées en arc de cercle et destinées à coopérer avec ledit second capteur.

7. Dispositif selon la revendication 4, **caractérisé en ce que** ledit boitier est fixé sur une table de transport (16) de façon amovible au moyen d'un rail (18).

8. Dispositif selon la revendication 7, **caractérisé en ce qu'**il comporte en outre un bouton de commande (20) actionnant des pions (22A, 22B) traversant ledit rail et permettant, par une pression de l'utilisateur, de désolidariser ledit boîtier de ladite table de transport.

9. Système d'affranchissement d'articles de courrier comportant un dispositif portable de détermination des dimensions d'un article de courrier selon l'une quelconque des revendications 4 à 8.

## Claims

1. A method of determining the dimensions of a mailpiece by means of a portable measuring device having, mounted in a housing (14) removably fixed to a transport table (16), a lever (30) mounted to pivot about a hinge pin (38) in opposition to resilient means (32), said lever comprising a first arm and a second arm that are interconnected via respective first ones of their ends at said hinge pin, the other end of said first arm being connected to a wheel (26) provided with a first rotary encoder (28) actuated by the rotation of said wheel, and the other end of said second arm being connected to a second rotary encoder (34) actuated by the pivoting of said lever, said housing also being provided with an opening (12) having a side reference surface (12A) for guiding said mailpiece while it is passing under said wheel, said method being **characterized in that** it comprises the following steps:
• driving said wheel in rotation after the operator has guided said mailpiece in a first pass along said side reference surface, said mailpiece being passed under said wheel along a first dimension of said mailpiece;
• generating pulses at said first rotary encoder, corresponding to said first dimension of said mailpiece;
• using a processing unit (36) to determine a value for said first dimension of said mailpiece, and communicating said value to a franking system to which said portable device is connected;
• driving said wheel in rotation after the operator has guided said mailpiece in a second pass along said side reference surface, said mailpiece being passed under said wheel along a second dimension of said mailpiece;
• generating pulses at said first rotary encoder, corresponding to said second dimension of said mailpiece;
• using said processing unit to determine a value for said second dimension of said mailpiece, and communicating said value to said franking system, and depending on whether said mailpiece is an envelope or a parcel:
• driving said wheel in rotation after the operator has guided said parcel in a third pass along said side reference surface, said parcel being passed under said wheel along a third dimension of said parcel, said pivoting lever being locked in a determined position by a pin (42) passing through it, and said housing (14) being separated from said transport table (16);
• generating pulses at said first rotary encoder, corresponding to said third dimension of said parcel; and
• using said processing unit to determine a value for said third dimension of said parcel, and communicating said value to said franking system, or
• pivoting said lever to a position that is substantially constant and that corresponds to a third dimension of said envelope;
• generating pulses at said second rotary encoder corresponding to said third dimension of said envelope; and
• using said processing unit to determine a value for said third dimension of said envelope and communicating said value to said franking system.

2. A method according to claim 1, **characterized in that** said dimensional values are displayed on a user interface incorporated into at least one of the elements constituted by said franking system and by said portable measuring device.

3. A method according to claim 1 or claim 2, **characterized in that** said portable measuring device is connected to said franking system via a wireless link.

4. Portable measuring device for determining the dimensions of a mailpiece comprising, mounted in a housing (14) removably fixed to a transport table (16) provided with an opening (12) having a side reference surface (12A) for guiding said mailpiece, a lever (30) mounted to pivot about a hinge pin (38) in opposition to resilient means (32), said lever comprising a first arm and a second arm that are interconnected via respective first ones of their ends at said hinge pin, the other end of said first arm being connected to a wheel (26) provided with a first rotary encoder (28) actuated by the rotation of said wheel, and the other end of said second arm being connected to a second rotary encoder (34) actuated by the pivoting of said lever, and a processing unit (36) connected to said first and second rotary encoders for, depending on whether said mailpiece is an envelope or a parcel:
• determining the length, width and thickness of said envelope after the operator has guided said envelope twice along said side reference surface; or
• determining the length, width and height of said parcel after the operator has guided said parcel three times along said side reference surface, said pivoting lever being locked in a predetermined position by a pin (42) passing through it and said housing (14) being separated from the transport table (16).

5. Device according to claim 4, **characterized in that** said dimensions of said mailpiece are determined from a number of marks (28A, 34A) going past a sensor (28B, 34B) associated with each rotary encoder.

6. Device according to claim 4, **characterized in that** said second rotary encoder is in the form of a part of ring of about 30° with a plurality of slots or openings (34A) arranged in circle and destined to cooperate with said second sensor.

7. Device according to claim 4, **characterized in that** said housing is removably fixed to a transport table (16) by means of a track (18).

8. Device according to claim 7, **characterized in that** it comprises a control button (20) driving pins (22A, 22B) passing through said track and which permits to separate said housing from said transport table by a pressure of the user.

9. Mailpiece franking system comprising a portable measuring device for determining the dimensions of a mailpiece according to any one of claims 4 to 8.

## Patentansprüche

1. Verfahren zur Bestimmung der Abmessungen eines Poststücks mittels einer tragbaren Meßvorrichtung, die - in einem an einem Transporttisch (16) lösbar befestigten Gehäuse (14) angebracht - einen Hebel (30) umfaßt, der um eine Gelenkachse (38) entgegen einem Federmittel (32) verschwenkbar ist, wobei der Hebel einen ersten und einen zweiten Arm aufweist, die im Bereich der Gelenkachse durch ein Ende verbunden sind, wobei das andere Ende des ersten Arms mit einem Rad (26), das mit einem durch Drehen des Rades betätigten ersten Drehgeber (28) versehen ist, verbunden ist und das andere Ende des zweiten Arms mit einem durch Verschwenken des Hebels betätigten zweiten Drehgeber (34) verbunden ist, wobei das Gehäuse ferner mit einer Öffnung (12) versehen ist, die eine seitliche Bezugsfläche (12A) zum Führen des Poststücks während seines Durchlaufs unter dem Rad umfaßt, Verfahren, welches **dadurch gekennzeichnet ist, daß** es die folgenden Schritte umfaßt:
- Drehantreiben des Rades infolge eines ersten Führens -durch die Bedienungsperson- des Poststücks entlang der seitlichen Bezugsfläche, wobei das Poststück entlang einer ersten Abmessung des Poststücks unter dem Rad durchgeführt wird,
- Erzeugen von Impulsen im Bereich des ersten Drehgebers, die der ersten Abmessung des Poststücks entsprechen,
- Bestimmen eines Wertes der ersten Abmessung des Poststücks mittels einer Verarbeitungseinheit (36) und Übermitteln des Wertes an ein Frankiersystem, mit dem die tragbare Vorrichtung verbunden ist,
- Drehantreiben des Rades infolge eines zweiten Führens -durch die Bedienungsperson- des Poststücks entlang der seitlichen Bezugsfläche, wobei das Poststück entlang einer zweiten Abmessung des Poststücks unter dem Rad durchgeführt wird,
- Erzeugen von Impulsen im Bereich des ersten Drehgebers, die der zweiten Abmessung des Poststücks entsprechen,
- Bestimmen eines Wertes der zweiten Abmessung des Poststücks mittels der Verarbeitungseinheit und Übermitteln des Wertes an das Frankiersystem, und
je nachdem, ob das Poststück ein Kuvert oder ein Paket ist:
- Drehantreiben des Rades infolge eines dritten Führens -durch die Bedienungsperson- des Pakets entlang der seitlichen Bezugsfläche, wobei das Paket entlang einer dritten Abmessung des Pakets unter dem Rad durchgeführt wird, wobei der schwenkbare Hebel dann durch einen ihn durchgreifenden Stift (42) in einer vorbestimmten Position festgelegt und das Gehäuse (14) von dem Transporttisch (16) getrennt wird,
- Erzeugen von Impulsen im Bereich des ersten Drehgebers, die der dritten Abmessung des Pakets entsprechen, und
- Bestimmen eines Wertes der dritten Abmessung des Pakets mittels der Verarbeitungseinheit und Übermitteln des Wertes an das Frankiersystem, bzw.
- Verschwenken des Hebels bis in eine im wesentlichen konstante und einer dritten Abmessung des Kuverts entsprechende Position,
- Erzeugen von Impulsen im Bereich des zweiten Drehgebers, die der dritten Abmessung des Kuverts entsprechen, und
- Bestimmen eines Wertes der dritten Abmessung des Kuverts mittels der Verarbeitungseinheit und Übermitteln des Wertes an das Frankiersystem.

2. Verfahren nach Anspruch 1, **dadurch gekennzeichnet, daß** die Abmessungswerte im Bereich einer Benutzerschnittstelle, die in wenigstens das/die eine, das Frankiersystem oder die tragbare Meßvorrichtung, integriert ist, angezeigt werden.

3. Verfahren nach einem der Ansprüche 1 oder 2, **dadurch gekennzeichnet, daß** die tragbare Vorrichtung über eine Drahtlosverbindung mit dem Frankiersystem verbunden ist.

4. Tragbare Vorrichtung zur Bestimmung der Abmessungen eines Poststücks, umfassend - angebracht in einem Gehäuse (14), das an einem Transporttisch (16) lösbar befestigt und mit einer Öffnung (12) versehen ist, die eine seitliche Bezugsfläche (12A) zum Führen des Poststücks umfaßt - einen Hebel (30), der um eine Gelenkachse (38) entgegen einem Federmittel (32) verschwenkbar ist, wobei der Hebel einen ersten und einen zweiten Arm aufweist, die im Bereich der Gelenkachse durch ein Ende verbunden sind, wobei das andere Ende des ersten Arms mit einem Rad (26), das mit einem durch Drehen des Rades betätigten ersten Drehgeber (28) versehen ist, verbunden ist und das andere Ende des zweiten Arms mit einem durch Verschwenken des Hebels betätigten zweiten Drehgeber (34) verbunden ist, und wobei eine mit dem ersten und dem zweiten Drehgeber verbundene Verarbeitungseinheit (36), je nachdem, ob das Poststück ein Kuvert oder ein Paket ist, ermöglicht:
- die Länge, die Breite und die Dicke des Kuverts zu bestimmen, wenn duch die Bedienungsperson dieses zweimal entlang der seitlichen Bezugsfläche geführt wird, bzw.
- die Länge, die Breite und die Höhe des Pakets zu bestimmen, wenn duch die Bedienungsperson dieses dreimal entlang der seitlichen Bezugsfläche geführt wird, wobei der schwenkbare Hebel dann durch einen ihn durchgreifenden Stift (42) in einer vorbestimmten Position festgelegt und das Gehäuse (14) von dem Transporttisch (16) getrennt wird.

5. Vorrichtung nach Anspruch 4, **dadurch gekennzeichnet, daß** die Abmessungen des Poststücks anhand einer Anzahl von Markierungen (28A, 34A), die an einem jedem der Drehgeber zugeordneten Sensor (28B, 34B) vorbeilaufen, bestimmt werden.

6. Vorrichtung nach Anspruch 4, **dadurch gekennzeichnet, daß** der zweite Drehgeber in Form eines Ringteils mit einem Winkel von etwa 30° vorliegt, das eine Vielzahl von Schlitzen oder Öffnungen (34A) aufweist, die kreisbogenförmig angeordnet und dazu bestimmt sind, mit dem zweiten Sensor zusammenzuwirken.

7. Vorrichtung nach Anspruch 4, **dadurch gekennzeichnet, daß** das Gehäuse mittels einer Schiene (18) lösbar an einem Transporttisch (16) befestigt ist.

8. Vorrichtung nach Anspruch 7, **dadurch gekennzeichnet, daß** sie ferner einen Betätigungsknopf (20) umfaßt, der die Schiene durchgreifende Stifte (22A, 22B) betätigt und durch ein Drücken seitens des Benutzers ermöglicht, das Gehäuse von dem Transporttisch zu trennen.

9. System zum Frankieren von Poststücken, umfassend eine tragbare Vorrichtung zur Bestimmung der Abmessungen eines Poststücks nach einem der Ansprüche 4 bis 8.
